(19) **Europäisches Patentamt / European Patent Office / Office européen des brevets**

(11) **EP 4 039 492 A1**

(12) # EUROPEAN PATENT APPLICATION
published in accordance with Art. 153(4) EPC

(43) Date of publication:
**10.08.2022 Bulletin 2022/32**

(21) Application number: **20872761.0**

(22) Date of filing: **22.09.2020**

(51) International Patent Classification (IPC):
**B42D 25/20** (2014.01)

(52) Cooperative Patent Classification (CPC):
**B42D 25/20; B42D 25/23; B42D 25/29;
B42D 25/324**

(86) International application number:
**PCT/CN2020/116770**

(87) International publication number:
**WO 2021/063213 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2019 CN 201910943319**

(71) Applicants:
• **Zhongchao Special Security Technology Co., Ltd
Beijing 100070 (CN)**

• **China Banknote Printing and Minting Corp.
Beijing 100044 (CN)**

(72) Inventors:
• **SUN, Kai
Beijing 100070 (CN)**
• **ZHU, Jun
Beijing 100070 (CN)**

(74) Representative: **Glawe, Delfs, Moll
Partnerschaft mbB von
Patent- und Rechtsanwälten
Postfach 13 03 91
20103 Hamburg (DE)**

(54) **OPTICAL ANTI-COUNTERFEITING ELEMENT AND ANTI-COUNTERFEITING PRODUCT**

(57) Provided are an optical anti-counterfeiting element and an anti-counterfeiting product, the optical anti-counterfeiting element comprises: a substrate (1); and a plurality of Fresnel structures (2) with preset lateral dimensions formed on the substrate (1), the plurality of Fresnel structures (2), when illuminated by a preset light source, being used to form preset graphic information in the transmission direction, and to present the preset graphic information with a relief effect in the reflection direction. The optical anti-counterfeiting element, when illuminated, reproduces a preset pattern from the transmission direction, and presents a relief effect from the reflection direction. The element improves anti-counterfeiting ability and recognition, and has a simple identification process.

Fig. 1

## Description

### Cross-Reference to Related Application

This application claims priority to Chinese Patent Application No. 201910943319.0, filed to the China National Intellectual Property Administration on September 30, 2019, the present invention of which is hereby incorporated by reference in its entirety.

### Technical Field

The present invention relates to the field of optical anti-counterfeiting technologies, and specifically, to an optical anti-counterfeiting element and an anti-counterfeiting product.

### Background

Nowadays, the optically variable technology is widely used in the public security of high anti-counterfeiting negotiable securities such as banknotes. The technology has characteristics of dynamic images and color changes observable with naked eyes, and cannot be imitated or duplicated by using electronic devices such as a camera, a scanner, a printer, and the like.

Using instrument-assisted anti-counterfeiting characteristics on the banknotes can increase the anti-counterfeiting capabilities of the banknotes. An observer cannot immediately recognize these characteristics, but may find obvious and recognizable characteristics at once by using simple tools. The most common instrument-assisted anti-counterfeiting characteristics are fluorescent or phosphorescent inks, which can be checked with UV lamps easily obtained. Since this type of ink has been widely used, the anti-counterfeiting performance of the ink has also decreased. Since then, various alternative solutions including liquid crystal polarizing characteristics or diffractive optical elements have been proposed. However, the diffractive optical elements need to be recognized by using a laser light source.

With the anti-counterfeiting popularity of mobile phones in the world, various mobile phone-based identification solutions have been proposed. However, most of these solutions need to photograph the to-be-identified banknotes or files by using a camera, and then a specific phone application (APP) is used to recognize pictures of the to-be-identified banknotes or the files. Such an identification method needs to download the corresponding APP to perform a corresponding identification process, so that the method is tedious and time-consuming in process.

### Summary

Some embodiments of the present invention provide an optical anti-counterfeiting element and an anti-counterfeiting product. Under irradiation of a portable light source such as a phone flashlight, a preset pattern can be reproduced in a transmission direction, and a relief effect in a reflection direction can be presented. Therefore, anti-counterfeiting ability and recognition can be improved, and a simple identification process can be achieved.

In an embodiment of the present invention provides an optical anti-counterfeiting element. The optical anti-counterfeiting element includes: a substrate; and a plurality of Fresnel structures having preset lateral dimensions and formed on the substrate. The plurality of Fresnel structures are configured to form preset graphic information in a transmission direction under irradiation of a preset light source, and to present the preset graphic information with a relief effect in a reflection direction.

In an embodiment, under a case that at least two Fresnel structures in the plurality of Fresnel structures have an overlapping area, a reflective facet of each of the at least two Fresnel structures in the overlapping area is equiprobably selected as a reflective facet in the overlapping area.

In an embodiment, the preset lateral dimension is in a range of 5 to 50 $\mu$m.

In an embodiment, the height distribution of the Fresnel structure in a preset direction accords with an elliptic equation.

In an embodiment, a height of the Fresnel structure is less than 10 $\mu$m.

In an embodiment, a focal length of the Fresnel structure is in a range of 5 to 50 cm.

In an embodiment, the Fresnel structure is a structure cut from a spherical lens or a cylindrical lens.

In an embodiment, a divergence angle of the preset light source is less than 45°.

In an embodiment, the preset light source is sunlight, flashlight or spotlight.

In an embodiment, the optical anti-counterfeiting element further includes a color modulation structure. The color modulation structure is formed on the Fresnel structure and configured to modulate a color of light reflected or transmitted by the Fresnel structure, to cause the preset graphic information to present a preset color.

In an embodiment, the color modulation structure includes a subwavelength microstructure and a reflection enhancement layer formed on the subwavelength microstructure; or a microstructure with steep sidewalls.

Another embodiment of the present invention provides an anti-counterfeiting product. The anti-counterfeiting product includes the optical anti-counterfeiting element.

In an embodiment, the anti-counterfeiting product includes a banknote, an identity card, a bank card, or a draft.

Through the above technical solutions, in the present invention, the plurality of Fresnel structures having preset lateral dimensions are creatively formed on the substrate. Therefore, under irradiation of a portable light source such as a phone flashlight, a preset pattern can be reproduced in a transmission direction, and a relief effect in a reflection direction can be presented. Therefore, anti-counterfeiting ability and recognition can be improved, and a simple identification process can be achieved.

Other features and advantages of the present invention will be described in detail in the specific implementations below.

**Brief Description of the Drawings**

The accompanying drawings are used to provide a further understanding of the utility model, and constitute a part of the specification, which are used to explain the utility model with the specific implementations below, and do not constitute a limitation of the utility model. In the drawings:

Fig. 1 is a schematic structural diagram of an optical anti-counterfeiting element according to an embodiment of the present invention.

Fig. 2 (a) is a schematic diagram of a Fresnel structure cut from a cylindrical lens according to an embodiment of the present invention.

Fig. 2 (b) is a schematic diagram of an image presented by the Fresnel structure (of which height is 0.5 mm) in Fig. 2 (a) in a transmission direction according to an embodiment of the present invention.

Fig. 2 (c) is a schematic diagram of an image presented by the Fresnel structure (of which height is 5 $\mu$m) in Fig. 2 (a) in a transmission direction according to an embodiment of the present invention.

Fig. 3 (a) is a schematic diagram of a Fresnel structure cut from a spherical lens according to an embodiment of the present invention.

Fig. 3 (b) is a schematic diagram of an image presented by the Fresnel structure in Fig. 3 (a) in a transmission direction according to an embodiment of the present invention.

Fig. 4 (a) is a schematic diagram of a Fresnel structure according to an embodiment of the present invention.

Fig. 4 (b) is a schematic structural diagram of the Fresnel structure divided into 4 sub-areas in Fig. 4 (a) according to an embodiment of the present invention.

Fig. 4 (c) is a schematic diagram of an image presented by a Fresnel structure in a reflection direction by using a method of equiprobably selecting a reflective facet in an overlapping area according to an embodiment of the present invention.

Fig. 5 is a cross-sectional view of an optical anti-counterfeiting element according to an embodiment of the present invention.

Fig. 6 is a schematic diagram of a banknote according to an embodiment of the present invention.

<div align="center">Description of reference numerals</div>

| | | | |
|---|---|---|---|
| 1 | Substrate | 2 | Fresnel structure |
| 3 | Color modulation structure | 5 | Banknote |
| 6 | Wide strip | 7 | Window |
| 30 | Subwavelength microstructure | 32 | Reflection enhancement layer |

**Detailed Description of the Embodiments**

The specific implementations of the present invention will be described in detail below with reference to the accompanying drawings. It should be understood that the specific implementations described here are merely used to describe and explain the present invention, and are not used to limit the present invention.

Before the specific implementations of the present invention are introduced, the 'stroke' is briefly introduced first. 'Stroke' refers to a continuous line or an isolated dot-like area in a design pattern.

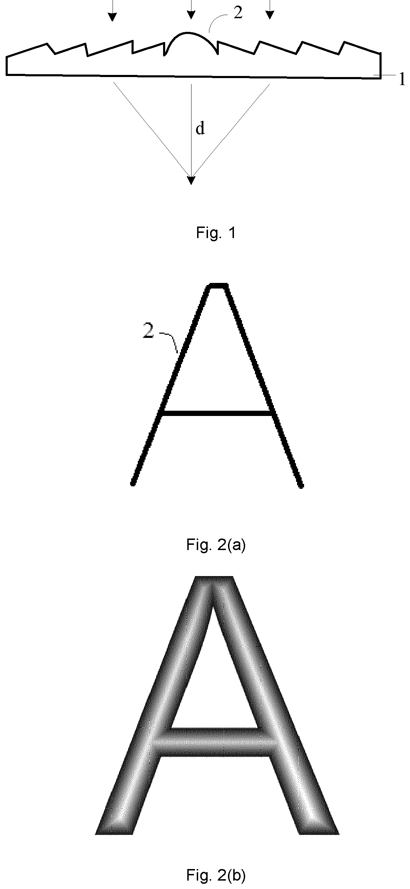

Fig. 1 is a schematic structural diagram of an optical anti-counterfeiting element according to an embodiment of the present invention. An optical anti-counterfeiting element may include: a substrate 1; and a plurality of Fresnel structures 2 having preset lateral dimensions and formed on the substrate 1. The plurality of Fresnel structures 2 are configured to form preset graphic information in a transmission direction under irradiation of a preset light source, and to present the preset graphic information with a relief effect in a reflection direction. The substrate 1 may be one of a paper or a thin film (for example, a PET film or an aluminum laminated film and the like). Compared with the related art, the above identification method provided by the present invention does not need to download a phone application (APP). The preset light source required by observation may be a flashlight that may be directly opened on a phone lock screen interface installed with Android or Apple systems. Therefore, a simple identification process can be achieved. In addition, the preset light source is not limited to the flashlight. All bright point light sources (for example, direct sunlight) or parallel light (for example, spotlight) having a single direction can be used to perform recognition.

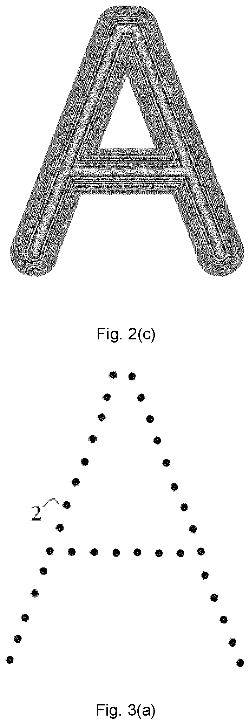

The Fresnel structure 2 may be a structure (as shown in Fig. 2 (a)) cut from a cylindrical lens. Specifically, the Fresnel structure 2 may be any portion in the cylindrical lens. That is to say, there is no limitation to a shape of the cut structure. In addition, in theory, a lateral dimension, a longitudinal dimension and an azimuth angle of the cylindrical lens are not limited, but are adjusted according to the spacing of dots forming a graph. In an embodiment, the azimuth angle of the cylindrical lens at some dot is consistent to a tangential direction of a preset graph at the dot. In addition, the Fresnel structure 2 may also be a structure (as shown in Fig. 3 (a)) cut from a spherical lens. Specifically, the Fresnel structure 2 may be any portion in the spherical lens, and may be a circle or a circular ring concentric with the spherical lens. That is to say, there is no limitation to a shape of the cut structure. In addition, in theory, there is no limitation to a diameter of the spherical lens. The larger the diameter of the spherical lens, the greater inclination angle of the cut Fresnel structure.

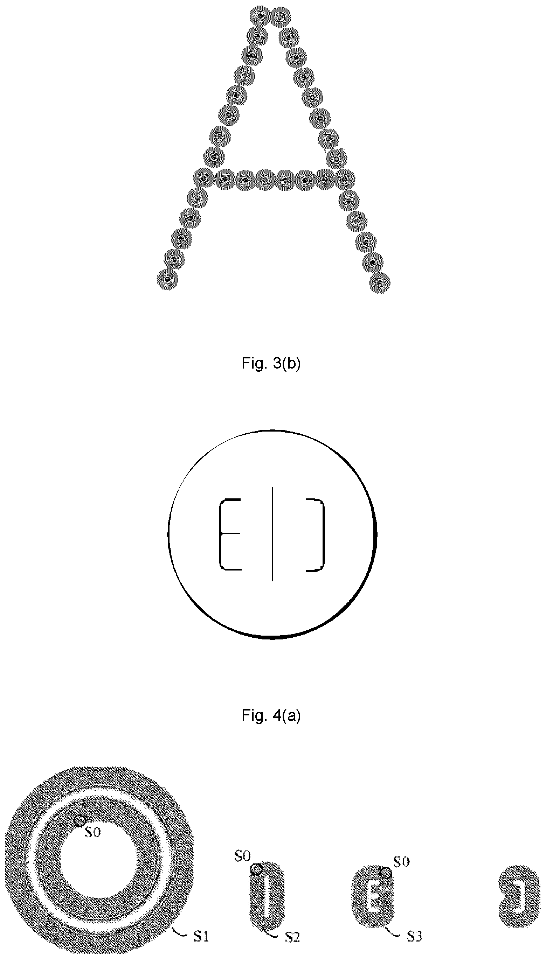

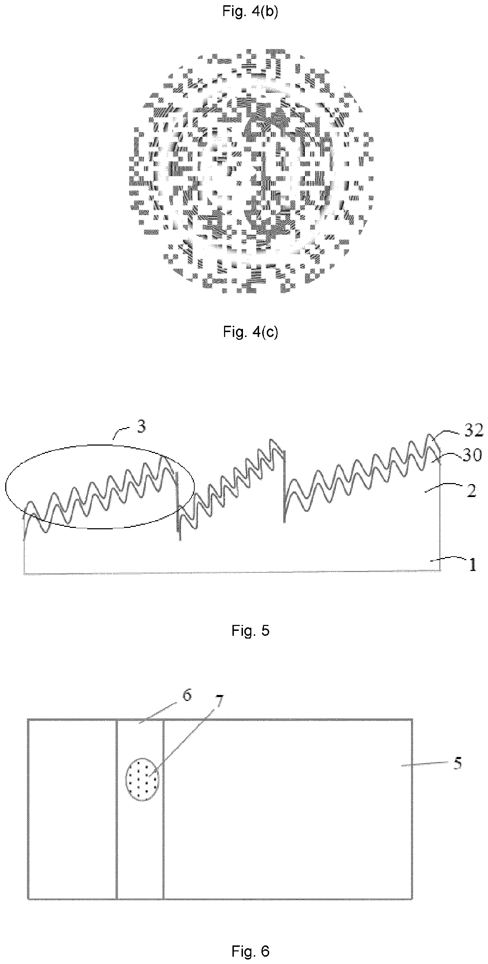

The Fresnel structure 2 in the optical anti-counterfeiting element consists of a plurality of reflective facets. Inclination angles and azimuth angles of the plurality of reflective facets meet a same Fresnel formula. The reflective facets may be a curved structure (not shown) or a planar structure (as shown in Fig. 5). Therefore, each Fresnel structure 2 (for example, corresponding to a stroke '.' in the word 'A') cut from the spherical lens correspondingly generates one pixel point. The plurality of Fresnel structures 2 of a stroke '/' forming the word 'A' correspondingly generate and form a plurality of pixel points (as shown in Fig. 3 (b)) of stroke patterns corresponding to the stroke. Each Fresnel structure 2 cut from the cylindrical lens correspondingly generates and forms a series of pixel points (as shown in Fig. 2 (c)) of a certain stroke (for example, the stroke '/' in the word 'A'). Therefore, the preset graphic information can be presented by designing the distribution of the plurality of Fresnel structures 2. For example, by designing the plurality of Fresnel structures of simple 'A' distribution in Fig. 2 (a) or Fig. 3 (a), correspondingly, when the preset light source irradiates the optical anti-counterfeiting element, the graph 'A' in Fig. 2 (b) or Fig. 3 (b) is presented. Alternatively, by designing the plurality of Fresnel structures of complex company identifier distribution in Fig. 4 (a), correspondingly, when the preset light source irradiates the optical anti-counterfeiting element, an image of a company identifier in Fig. 4 (b) is presented. It is to be noted that, the preset graphic information may be meaningful graphic information such as letters, numbers, currency symbols or a combination thereof.

Definitely, through reasonable arrangement, the plurality of Fresnel structures can be divided into a plurality of combinations. Each combination meets different Fresnel formulas (positions where focal planes in the different Fresnel formulas are different). Therefore, under the irradiation of the preset light source such as the phone flashlight, one or more pieces of preset graphic information can be projected on the plurality of focal planes.

With regard to a visible spectral range of 380 to 780 nm, the lateral dimension of the Fresnel structure is greater than 5 $\mu$m. Therefore, diffraction to visible light can be avoided. In addition, in order to generate a more detailed design image, the lateral dimension needs to be less than 50 $\mu$m. However, when the lateral dimension of the Fresnel structure in the optical anti-counterfeiting element is designed, the larger the lateral dimension of the Fresnel structure, the better focus effect in the transmission direction. That is to say, the brighter the presented preset graphic information, the weaker the presented relief effect in the reflection direction due to possible stacking between the strokes. In this embodiment of the present invention, when a preset lateral dimension is in a range of 5 to 50 $\mu$m, under a case that a portable light source such as the phone flashlight irradiates the optical anti-counterfeiting element, the bright preset graphic information can be observed in the transmission direction, and an obvious relief effect can also be observed in the reflection direction.

For ease of recognition of an observer, in this embodiment of the present invention, a focal length range of the Fresnel structure may be selected as 5 to 50 cm.

After the Fresnel structure is cut from the cylindrical lens or the spherical lens, a processing device (such as a precision lathe) may be used to directly form the plurality of Fresnel structures (for example, the plurality of Fresnel structures 2 projecting graphs) meeting preset height distribution on the substrate. By considering a common design dimension (for example, 5 to 50 mm) of an anti-counterfeiting product, a total line width of a graph (for example, the graph 'A') is about 0.5 to 5 mm (the width being 5-20% of a design graphic dimension, but being able to be adjusted according to line distribution of the graph). The height that is easily recognized by the human eyes is about 0.1 to 1 mm. Correspondingly, a line profile presented by the Fresnel structure in Fig. 2 (a) designed according to the above dimension is a grayscale map having a certain width. A grayscale value represents height information, 255 is the highest point, and 0 corresponds to the lowest point. However, if a height of the Fresnel structure is in a range of 0.1 to 1 mm, the Fresnel structure is hard to process and form on plastic or paper in a manner of roll-to-roll embossing. Therefore, in order to achieve direct processing by means of the manner of roll-to-roll embossing, the Fresnel structure with large height can be cut into the Fresnel structure with the height being less than 10 $\mu$m in a certain manner.

In order to achieve a desirable focus effect during transmission projection, the heights of the Fresnel structures located everywhere should be properly designed. Considering that an incident light is a parallel light, according to an equal optical path principle, it may be calculated that: the height distribution of the Fresnel structure in a preset direction should accord with an elliptic equation. Specifically, the elliptic equation is $\dfrac{x^2}{a^2} + \dfrac{y^2}{b^2} = 1$ , where x is a position in the preset direction, y is the height of the Fresnel structure, $a = f\sqrt{\dfrac{n-1}{n+1}}$ , $b = f\dfrac{n}{n+1}$ , n is a refractive index of a material forming a reflective facet, and f is a reproduced focal length in the Fresnel formula. Using Fig. 2 (a) as an example, under a case that the height distribution of three Fresnel structures in a direction perpendicular to a stroke all meet the same elliptic equation, the image 'A' presented in the transmission direction can be sharper and clearer. However, since there may be a difference between the height distribution of the actually manufactured Fresnel structure and the above elliptic equation, lines of a projection graph are not sharp and clear enough. For example, the graph 'A' presented in the transmission direction consists of a stroke pattern consisting of a plurality of stripes, for example, as shown in Fig. 2 (c) or 3 (b). In addition, an actual lighting source may not be a strict parallel light source, which may cause the lines of the presented graph to be not sharp and clear enough.

The above content introduces that the height distribution deviation of the actually manufactured Fresnel structure may cause the lines of the projection graph to be not sharp enough. In addition to this, in a case that the preset graphic information to be presented is a complex graph, the designed Fresnel structure correspondingly overlaps at some areas. In the overlapping area, an effect of transmission reproduction is severely degraded. Under this case, in this embodiment of the present invention, the Fresnel structure in the overlapping area is redesigned by using the following manners. Specifically, under a case that at least two Fresnel structures in the plurality of Fresnel structures have an overlapping area, a reflective facet of each of the at least two Fresnel structures in the overlapping area is equiprobably selected as a reflective facet in the overlapping area.

Specifically, with regard to the preset graphic information to be presented being a complex design graph, for example, a company identifier shown in Fig. 4 (a), the design graph may be divided into two or more sub-areas according to a certain rule. Definitely, there are many options for specific division manners. The plurality of Fresnel structures in each sub-area may first designed according to an implementation shown in Fig. 2 (a) or Fig. 3 (a). Generally, the Fresnel structures in different sub-areas are likely to overlap in area. Then, processing is performed in the overlapping area according to an equiprobable selection manner. For example, three sub-areas (S1, S2, S3) are overlapped in a certain area S0. In the overlapping area S0, a reflective facet in 1/3 of the area of the overlapping area S0 corresponding to the S1, S2 and S3 sub-areas is selected as a reflective facet in the overlapping area (selection may be performed according to a certain order, for example, S1-S2-S3, or may be in a random order, as long as selected proportions of S1, S2 and S3 are basically the same). In a non-overlapping area, all of the Fresnel structures in different sub-areas may be used, so that the best imaging effect is achieved. Definitely, the Fresnel structures in a certain proportion in different sub-areas may further be used, but the imaging effect may become worse (as shown in Fig. 4 (c)).

When the plurality of sub-areas are overlapped with each other in area, according to the above design manner of equiprobably selecting the reflective facet in the overlapping area, the graph designed in the reflection direction may be unrecognizable to a certain extent, and an unrecognizable degree depends on the complexity and overlapping degree of the designed graph. According to a processing method provided in this embodiment, the designed pattern may be hidden to a certain extent in reflection, but an impression of a relief effect is still maintained, but the designed pattern can be seen through transmission projection at the same time.

In addition to the height distribution of the above Fresnel structure, transmission projection is further affected by a divergence angle of the preset light source. Therefore, in this embodiment, in order to cause a graph of transmission projection clearer, the divergence angle of the preset light source is required to be limited to a certain extent.

The divergence angle of the preset light source is firstly and briefly introduced. In a polar coordinate system of light intensity ($\rho$)-incident angle ($\theta$), the light intensity is maximum at the incident angle $\theta_1$, the light intensity decreases to half of the maximum value at the incident angle $\theta_2$, and $.|\theta_1-\theta_2|$ is defined as the divergence angle of a light source. In order to implement a clear projection image, In an embodiment, the divergence angle of the preset light source is less than 45°.

If only the Fresnel structure exists, the reflection relief effect and the transmission projection image may only be in the form of grayscale, which implements an image of 'black-gray-white'. In order to enrich information amount of the image, the anti-counterfeiting ability is improved by increasing a technical difficulty, easy public observation is achieved. In the present invention, a 'color modulation structure' is arranged on the reflective facet in the Fresnel structure, so that the colorization of reflected and transmitted images can be realized. Specifically, the optical anti-counterfeiting element may further include a color modulation structure 3. The color modulation structure is formed on the Fresnel structure 2 and configured to modulate a color of light reflected or transmitted by the Fresnel structure 2, to cause the preset graphic information to present a preset color, as shown in Fig. 5. Therefore, by changing parameters of the color modulation structure 3, for example, a characteristic dimension, a depth and the like, the control of colors is achieved, so that customized colors can be realized. Therefore, the reflected and transmitted images may be monochrome or colorful, or even may be in gradient colors.

The color modulation structure 3 may include a subwavelength microstructure 30 and a reflection enhancement layer 32 formed on the subwavelength microstructure 30, as shown in Fig. 5; or the color modulation structure includes a microstructure (not shown) with steep sidewalls. The subwavelength microstructure 30 and the microstructure (not shown) with steep sidewalls may be one-dimensional gratings or two-dimensional gratings. The color modulation structure 3 basically does not affect a refraction angle of the Fresnel structure 2, so that a projection reproduction effect is not affected.

The implementation of a principle of image colorization by using two different color modulation structures 3 is simply introduced below.

Specifically, with regard to the color modulation structure 3 shown in Fig. 5 and formed by the reflection enhancement layer 32 and the subwavelength microstructure 30, if the color modulation structure 3 only uses a diffraction grating of which period is less than a wavelength of visible light, that is, the subwavelength microstructure 30, the corresponding optical anti-counterfeiting element does not generate obvious color characteristics. Therefore, after the reflection enhancement layer 32 is added on the subwavelength microstructure 30, color and/or polarization characteristics are generated through plasmon resonance absorption of the reflection enhancement layer 32. The reflection enhancement layer 32 may be a metal layer or a dielectric layer (which may be single-layer or multi-layer). A material of the metal layer may be a metal such as gold, silver, copper, aluminum, iron, tin, zinc, nickel, and chromium or an alloy thereof. A material of the dielectric layer may be a high/low refractive index material. The high refractive index material (for example, a refractive index being greater than or equal 1.7) may be $ZnS$, $TiN$, $TiO_2$, $TiO$, $Ti_2O_3$, $Ti_3O_5$, $Ta_2O_5$, $Nb_2O_5$, $CeO_2$, $Bi_2O_3$, $Cr_2O_3$, $Fe_2O_3$, $HfO_2$, or $ZnO$ and the like. The low refractive index material (for example, the refractive index being less than 1.7) may be $MgF_2$, $SiO_2$, or the like. A period range of the subwavelength microstructure 30 in an x direction and/or a y direction (that is, a lateral characteristic dimension) is 0.3 to 5 $\mu$m, which is 1/10 to 1/5 the lateral dimension of the Fresnel structure 2 (the lateral dimension of the Fresnel structure is usually in a range of 5 to 20 $\mu$m). A trench depth of the subwavelength microstructure 30 is within a range of 0.1 to 0.2 $\mu$m.

For the color modulation structure formed by the microstructure with steep sidewalls, since upper and lower surfaces of the microstructure with steep sidewalls have a perpendicular height difference, optical distances of any two beams of reflection (or transmission) light are changed under the irradiation of the incident light, so that an optical distance difference appears, which causes interference phenomenon between the two beams of the reflection (or transmission) light. Finally, the reflection (or transmission) light having a specific color is obtained in the reflection (or transmission) direction. A characteristic dimension range of the microstructure with steep sidewalls in the x direction and/or the y direction is 0.5 to 100 $\mu$m. in an embodiment, 1 to 20 $\mu$m. A depth range of the microstructure with steep sidewalls in a z direction is 0.05 to 10 $\mu$m. In an embodiment, 0.1 to 3 $\mu$m.

In addition, a protective layer (not shown) may be coated on a surface of the color modulation structure 3 to prolong the service life of the optical anti-counterfeiting element. A material of the protective layer may be a transparent material such as epoxy, acrylic acid, polyurethane, polyamide, or a UV curing adhesive. When there has the protective layer, the refractive index of the Fresnel structure 2 shall be higher than a refractive index of the protective layer, and a preferred range of a difference between the refractive indexes may be in a range of 0.05 to 0.3.

The Fresnel structure 2 may be directly applied to the substrate 1. An anti-counterfeiting characteristic recognizable by a mobile phone can be generated without increasing other vapor deposition and printing processes. The anti-counterfeiting characteristic is easy to explain to the public, and a projection pattern is easily observed by a common observer. In addition, it is to be noted that, an average light transmittance of the optical anti-counterfeiting element provided in the embodiments of the present invention at a visible light band may exceed 30%.

To sum up, in the present invention, the plurality of Fresnel structures having preset lateral dimensions are creatively formed on the substrate. Therefore, under irradiation of a portable light source such as a phone flashlight, a preset pattern can be reproduced in a transmission direction, and a relief effect in a reflection direction can be presented. Therefore, anti-counterfeiting ability and recognition can be improved, and a simple identification process can be achieved.

Correspondingly, an embodiment of the present invention further provides an anti-counterfeiting product. The anti-counterfeiting product includes the optical anti-counterfeiting element.

The optical anti-counterfeiting element may be disposed in the anti-counterfeiting product in manners of safety line windowing, sticker windowing or labeling. The anti-counterfeiting product may include products with high added values, such as banknotes, identity cards, bank cards, drafts, or negotiable securities and the like.

Fig. 6 is a schematic diagram of an optical anti-counterfeiting element applied to a banknote 5 according to an embodiment of the present invention. The optical anti-counterfeiting element may be adhered to or directly processed on a surface of the banknote in the form of a wide strip 6. An area where the wide strip 6 is located has a window 7 (known as a viewing window). A shape and size of the window 7 are arbitrary, for example, various regular or irregular shapes such as circles, rectangles or squares, and sizes greater than, less than or equal to a width of the wide strip 6 are feasible. The window 7 is obtained by partially removing the banknote 5. The transmission anti-counterfeiting characteristic of the wide strip 6 may be observed through the window 7. With regard to the banknote 5 using a transparent substrate, the window 7 may further be a part of the substrate of the banknote 5.

The preferred implementations of the present invention are described in detail above with reference to the drawings. However, the present invention is not limited to the specific details in the above implementations, and within the scope of the technical concept of the present invention, various simple modifications can be made to the technical solutions of the present invention, and these simple modifications all fall within the protection scope of the present invention.

In addition, it is to be noted that, each specific technical feature described in the above specific implementations can be combined in any suitable manner without contradiction. In order to avoid unnecessary repetition, various possible combinations are not described separately in the present invention.

In addition, the various implementations of the present invention can also be combined arbitrarily, as long as without departing from the spirit of the present invention, and should also be regarded as the contents disclosed in the present invention.

**Claims**

1. An optical anti-counterfeiting element, comprising:

   a substrate; and
   a plurality of Fresnel structures having preset lateral dimensions and formed on the substrate, wherein the plurality of Fresnel structures are configured to form preset graphic information in a transmission direction under irradiation of the a preset light source, and to present the preset graphic information with a relief effect in a reflection direction.

2. The optical anti-counterfeiting element as claimed in claim 1, wherein, under a case that at least two Fresnel structures in the plurality of Fresnel structures have an overlapping area, a reflective facet of each of the at least two Fresnel structures in the overlapping area is equiprobably selected as a reflective facet in the overlapping area.

3. The optical anti-counterfeiting element as claimed in claim 1, wherein the preset lateral dimension is in a range of 5 to 50 μm.

4. The optical anti-counterfeiting element as claimed in claim 1, wherein a height distribution of the Fresnel structure in a preset direction accords with an elliptic equation.

5. The optical anti-counterfeiting element as claimed in claim 1, wherein a height of the Fresnel structure is less than 10 μm.

6. The optical anti-counterfeiting element as claimed in claim 1, wherein a focal length of the Fresnel structure is in a range of 5 to 50 cm.

7. The optical anti-counterfeiting element as claimed in claim 1, wherein the Fresnel structure is a structure cut from a spherical lens or a cylindrical lens.

8.  The optical anti-counterfeiting element as claimed in claim 1, wherein a divergence angle of the preset light source is less than 45°.

9.  The optical anti-counterfeiting element as claimed in claim 1, wherein the preset light source is direct sunlight, flashlight or spotlight.

10. The optical anti-counterfeiting element as claimed in claim 1, further comprising:
    a color modulation structure, formed on the Fresnel structure and configured to modulate a color of light reflected or transmitted by the Fresnel structure, to cause the preset graphic information to present a preset color.

11. The optical anti-counterfeiting element as claimed in claim 10, wherein the color modulation structure comprises:
    a subwavelength microstructure and a reflection enhancement layer formed on the subwavelength microstructure;
    or a microstructure with steep sidewalls.

12. An anti-counterfeiting product, comprising the optical anti-counterfeiting element as claimed in any of claims 1 to 11.

13. The anti-counterfeiting product as claimed in claim 12, comprising a banknote, an identity card, a bank card, or a draft.

Fig. 1

Fig. 2(a)

Fig. 2(b)

Fig. 2(c)

Fig. 3(a)

Fig. 3(b)

Fig. 4(a)

S0

S1

S0

S2

S0

E

S3

Fig. 4(b)

Fig. 4(c)

Fig. 5

Fig. 6

## INTERNATIONAL SEARCH REPORT

| International application No. |
|---|
| **PCT/CN2020/116770** |

**A. CLASSIFICATION OF SUBJECT MATTER**

B42D 25/20(2014.01)i

According to International Patent Classification (IPC) or to both national classification and IPC

**B. FIELDS SEARCHED**

Minimum documentation searched (classification system followed by classification symbols)

B42D 25/-

Documentation searched other than minimum documentation to the extent that such documents are included in the fields searched

Electronic data base consulted during the international search (name of data base and, where practicable, search terms used)

VEN; CNABS; CNKI: 菲涅耳, 菲涅尔, 反射, 微透镜, 透射, fresnel, reflect+, microlens, transmiss+, homology

**C. DOCUMENTS CONSIDERED TO BE RELEVANT**

| Category* | Citation of document, with indication, where appropriate, of the relevant passages | Relevant to claim No. |
|---|---|---|
| X | CN 101434176 A (CHINA BANKNOTE PRINTING AND MINTING CORPORATION) 20 May 2009 (2009-05-20)<br>description, page 5 line 26 to page 6 line 18, figure 5 | 1-13 |
| A | CN 103068526 A (GIESECKE & DEVRIENT GMBH) 24 April 2013 (2013-04-24)<br>entire document | 1-13 |
| A | CN 105189133 A (BUNDESDRUCKEREI GMBH; OVD KINEGRAM AG) 23 December 2015 (2015-12-23)<br>entire document | 1-13 |
| A | CN 1650193 A (3M INNOVATIVE PROPERTIES COMPANY) 03 August 2005 (2005-08-03)<br>entire document | 1-13 |
| A | WO 2015087275 A1 (ARJOWIGGINS SECURITY) 18 June 2015 (2015-06-18)<br>entire document | 1-13 |
| A | EP 3418065 A1 (GIESECKE DEVRIENT MOBILE SECURITY GMBH) 26 December 2018 (2018-12-26)<br>entire document | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 October 2019** | **19 November 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/116770**

| Patent document cited in search report | | | Publication date (day/month/year) | Patent family member(s) | | | Publication date (day/month/year) |
|---|---|---|---|---|---|---|---|
| CN | 101434176 | A | 20 May 2009 | CN | 101434176 | B | 07 November 2012 |
| CN | 103068526 | A | 24 April 2013 | EP | 3401117 | B1 | 03 June 2020 |
| | | | | US | 2013099474 | A1 | 25 April 2013 |
| | | | | AU | 2016256797 | A1 | 01 December 2016 |
| | | | | HK | 1178843 | A1 | 14 July 2017 |
| | | | | AU | 2011273910 | B2 | 11 August 2016 |
| | | | | WO | 2012000669 | A1 | 05 January 2012 |
| | | | | EP | 2588276 | A1 | 08 May 2013 |
| | | | | EP | 3401117 | A1 | 14 November 2018 |
| | | | | RU | 2560310 | C2 | 20 August 2015 |
| | | | | AU | 2011273910 | A1 | 07 February 2013 |
| | | | | RU | 2013104092 | A | 27 August 2014 |
| | | | | EP | 2588276 | B1 | 08 August 2018 |
| | | | | CN | 103068526 | B | 11 May 2016 |
| | | | | DE | 102010025775 | A1 | 05 January 2012 |
| CN | 105189133 | A | 23 December 2015 | DE | 102012108170 | A1 | 27 March 2014 |
| | | | | EP | 2897811 | A2 | 29 July 2015 |
| | | | | KR | 20150080487 | A | 09 July 2015 |
| | | | | CN | 105189133 | B | 26 September 2017 |
| | | | | WO | 2014033318 | A2 | 06 March 2014 |
| | | | | EP | 2897811 | B1 | 30 May 2018 |
| | | | | WO | 2014033318 | A3 | 17 April 2014 |
| | | | | US | 9592701 | B2 | 14 March 2017 |
| | | | | DE | 102012108170 | B4 | 22 January 2015 |
| | | | | US | 2015258835 | A1 | 17 September 2015 |
| | | | | KR | 102102012 | B1 | 20 April 2020 |
| CN | 1650193 | A | 03 August 2005 | EP | 1602946 | B1 | 26 October 2011 |
| | | | | MX | PA03011729 | A | 08 July 2004 |
| | | | | CN | 1312496 | C | 25 April 2007 |
| | | | | AT | 530933 | T | 15 November 2011 |
| | | | | KR | 20040020960 | A | 09 March 2004 |
| | | | | RU | 2003136147 | A | 27 February 2005 |
| | | | | AU | 2002320272 | B2 | 20 December 2007 |
| | | | | US | 7068434 | B2 | 27 June 2006 |
| | | | | US | 2002054434 | A1 | 09 May 2002 |
| | | | | JP | 2004534270 | A | 11 November 2004 |
| | | | | PL | 210068 | B1 | 30 November 2011 |
| | | | | BR | 0210766 | A | 20 July 2004 |
| | | | | EP | 1602946 | A1 | 07 December 2005 |
| | | | | PL | 367289 | A1 | 21 February 2005 |
| | | | | CA | 2452718 | C | 26 October 2010 |
| | | | | EP | 1405109 | A1 | 07 April 2004 |
| | | | | ZA | 200400846 | B | 06 September 2004 |
| | | | | WO | 03005075 | A1 | 16 January 2003 |
| | | | | ZA | 200400846 | A | 06 September 2004 |
| | | | | AU | 2002320272 | A2 | 21 January 2003 |
| | | | | HU | 0401435 | A2 | 28 October 2004 |
| | | | | CA | 2452718 | A1 | 16 January 2003 |
| | | | | HU | 0401435 | A3 | 28 October 2005 |
| | | | | KR | 100989014 | B1 | 20 October 2010 |

Form PCT/ISA/210 (patent family annex) (January 2015)

14

<table>
<tr><td colspan="2" align="center"><strong>INTERNATIONAL SEARCH REPORT</strong><br>Information on patent family members</td><td colspan="2">International application No.<br><strong>PCT/CN2020/116770</strong></td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td></td><td></td><td>TW    575740   B</td><td>11 February 2004</td></tr>
<tr><td></td><td></td><td>RU    2319185   C2</td><td>10 March 2008</td></tr>
<tr><td>WO   2015087275  A1</td><td>18 June 2015</td><td>FR    3014741   A1</td><td>19 June 2015</td></tr>
<tr><td>EP    3418065   A1</td><td>26 December 2018</td><td>DE  102017005779  A1</td><td>20 December 2018</td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910943319